Europäisches Patentamt

European Patent Office

Office européen des brevets

(19)

(11) Numéro de publication: **0 069 054**
**A2**

## (12) DEMANDE DE BREVET EUROPEEN

(21) Numéro de dépôt: **82810232.7**

(22) Date de dépôt: **28.05.82**

(51) Int. Cl.³: **G 02 B 7/26**

(30) Priorité: **01.06.81 FR 8110947**

(43) Date de publication de la demande: **05.01.83**
**Bulletin 83/1**

(84) Etats contractants désignés: **AT BE CH DE FR GB IT LI LU NL SE**

(71) Demandeur: **CABLOPTIC S.A., CH-2016 Cortaillod (CH)**
Demandeur: **CENTRE NATIONAL DE LA RECHERCHE SCIENTIFIQUE, 15, Quai Anatole France, F-75007 Paris (FR)**

(72) Inventeur: **Chartier, Germain INST. NAT. POLYT. E.N.S.I.E.G., Lab. de Génie Physique Domaine Universitaire, F-38402 Saint-Martin d'Here (FR)**
Inventeur: **Parriaux, Olivier INST. NAT. POLYT. E.N.S.I.E.G., Lab. de Génie Physique Domaine Universitaire, F-38402 Saint-Martin d'Here (FR)**
Inventeur: **Pellaux, Jean-Paul, Petits Chênes 2, CH-2000 Neuchatel (CH)**

(74) Mandataire: **Nithardt, Roland, CABINET ROLAND NITHARDT Rue Edouard Verdan 15, CH-1400 Yverdon (CH)**

(54) **Dispositif de couplage de fibres optiques et son procédé de fabrication.**

(57) Une pince (35, 36) dont les mâchoires sont munies de mordaches (38, 39) en métal bon conducteur de l'électricité, filetées de façon complémentaire de celle de la partie filetée (10) du culot (4) du dispositif (1), vient saisir le dispositif (1) par cette partie filetée (10) du culot (4) pendant qu'on presse fortement la capsule (17) sur l'extrémité filetée (10) du culot (4) et qu'on échauffe ces parties par effet Joule. La pince prend appui sur une partie (26) prenant elle-même appui sur le bâti (25) de la machine. Ainsi la partie isolante, en matière céramique (2) du dispositif ne subit aucune contrainte du fait de la pression exercée pendant cette opération de soudage.

EP 0 069 054 A2

0069054

# DISPOSITIF DE COUPLAGE DE FIBRES OPTIQUES ET
## SON PROCEDE DE FABRICATION

La présente invention concerne un dispositif de couplage d'un premier et d'un second tronçon de fibres optiques monomodes, respectivement préparés de telle manière que la gaine entourant leur coeur soit enlevée jusqu'au voisinage du coeur sur une longueur déterminée, par polissage selon un plan tangentiel à la fibre incurvée, et assemblés par collage de telle manière que les zones polies respectives des deux tronçons soient juxtaposées, dans lequel le premier tronçon de fibre optique a un coeur de diamètre $r_1$ et présente une variation d'indice de réfraction $\Delta n_1$ entre le coeur et la gaine entourant ce coeur, et dans lequel le second tronçon de fibre optique a un coeur de diamètre $r_2$ et présente une variation d'indice de réfraction $\Delta n_2$ entre le coeur et la gaine entourant ce coeur.

Elle concerne également un procédé de fabrication d'un dispositif de couplage tel que susmentionné.

On sait qu'une fibre optique peut transporter simultanément un grand nombre d'ondes porteuses de fréquences différentes.

Par conséquent, la capacité de transport d'informations d'une fibre optique peut être multipliée si l'on injecte, dans une même fibre optique monomode, plusieurs porteuses de fréquences différentes, et si l'on extrait sélectivement, à l'autre extrémité de la fibre, les différentes porteuses introduites.

La présente invention propose un dispositif de couplage et son procédé de fabrication, permettant d'effectuer le multiplexage et le démultiplexage des porteuses.

Dans ce but, le dispositif susmentionné est caractérisé en ce que les diamètres $r_1$ et $r_2$ des coeurs respectifs des deux tronçons de fibres optiques sont liés par la relation suivante :

$$r_1 > r_2$$

et en ce que les variations d'indice $\Delta n_1$ et $\Delta n_2$, respectives des deux

tronçons de fibres optiques, sont liées par la relation suivante :

$$\Delta n_1 < \Delta n_2$$

Selon une forme de réalisation avantageuse du dispositif de l'invention, les gaines entourant respectivement ces coeurs ont le même indice de réfraction.

Selon une variante préférée du dispositif selon l'invention, la gaine entourant le coeur du second tronçon de fibre optique a un indice de réfraction inférieur, au moins au voisinage du coeur, à l'indice de réfraction de la gaine entourant le coeur du premier tronçon de fibre optique.

Le procédé de fabrication du dispositif de couplage selon l'invention est caractérisé en ce que l'on prépare deux tronçons de fibres optiques ayant respectivement des coeurs de rayons $r_1$ et $r_2$ tels que : $r_1 > r_2$, ces tronçons étant sélectionnés sur des fibres optiques présentant des variations respectives d'indice de réfraction $\Delta n_1$ et $\Delta n_2$ entre le coeur et la gaine entourant le coeur, telles que : $\Delta n_1 < \Delta n_2$; en ce que l'on polit respectivement chacun de ces tronçons de fibres optiques selon un plan tangentiel à la fibre incurvée selon un rayon de courbure R, de manière à enlever la gaine entourant le coeur jusqu'au voisinage de ce coeur sur une longueur déterminée; et en ce que l'on assemble ces tronçons de fibres optiques, de manière à juxtaposer les zones polies des deux tronçons de fibres optiques.

La présente invention sera mieux comprise en référence à la description détaillée d'un exemple de réalisation et des dessins annexés, dans lesquels :

La figure 1 représente une vue schématique du dispositif de couplage selon l'invention,

Les figures 2A et 2B représentent schématiquement les sections transversales de deux formes de réalisation du dispositif de couplage selon l'invention,

Les figures 3A et 3B représentent les diagrammes de variation de l'indice de réfraction des seconds tronçons de fibres des dispositifs de couplage des fig. 2A et 2B, en fonction du rayon de ces fibres,

La figure 4 représente une vue schématique d'une fibre de section variable, utilisée pour sélectionner des tronçons de fibres servant à la
réalisation du dispositif de couplage selon l'invention,

La figure 5 représente les courbes de dispersion des deux tronçons de
fibres 1A et 2A représentés par la fig. 2A,

La figure 6 représente les courbes de dispersion des deux tronçons de
fibres 1B et 2B représentés par la fig. 2B,

La figure 7 représente un diagramme de transfert de la puissance dans le
dispositif de couplage selon l'invention, en fonction de la longueur
d'onde, et

La figure 8 représente diverses courbes de transfert de puissance pour
des dispositifs de couplages tels que celui représenté par la fig. 1,
pour différentes valeurs du rayon de courbure R des tronçons de fibres
couplées.

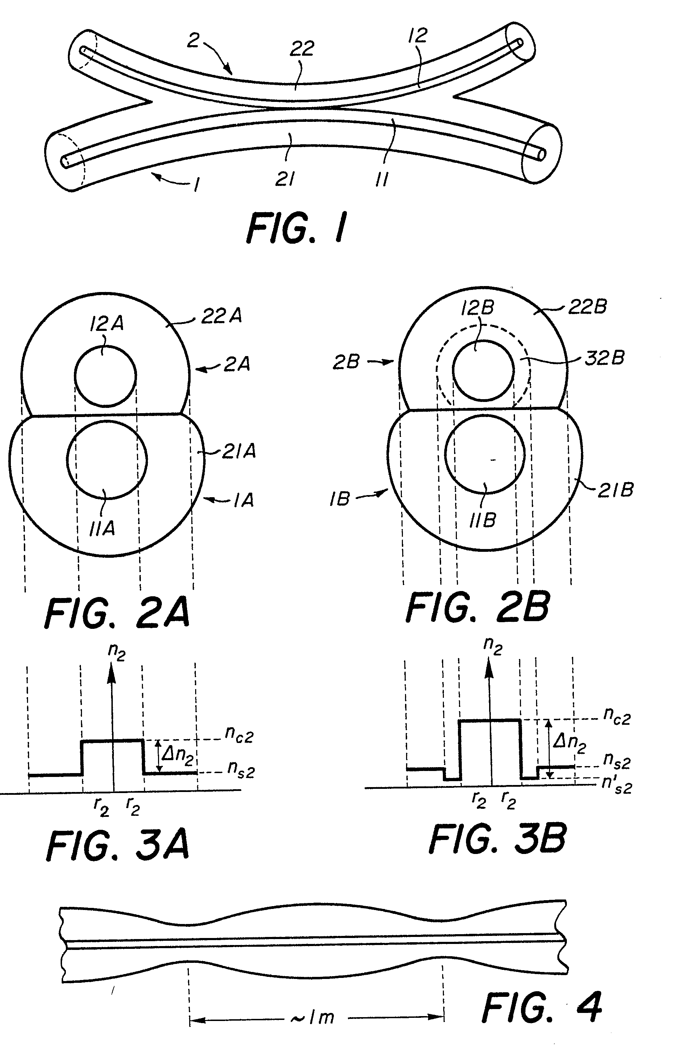

En référence à la fig. 1, le dispositif de couplage représenté comporte
un premier tronçon 1 de fibre optique ayant un coeur 11 et une gaine 21
entourant ce coeur, et un second tronçon de fibre optique 2 ayant un
coeur 12 et une gaine 22 entourant ce coeur. Les deux tronçons de fibres
ont été préalablement polis et assemblés selon un procédé décrit en détail dans la demande de brevet suisse n° 7694/80. Le coeur 11 du tronçon 1 de fibre optique a une section droite dont le rayon est égal à
$r_1$, et le coeur 12 du tronçon 2 de fibre optique a une section droite
dont le rayon est égal à $r_2$. Comme cela sera décrit plus en détail ci-
dessous, $r_1$ et $r_2$ sont choisis en fonction de la longueur d'onde pour
laquelle on envisage d'effectuer le couplage, pour un couple $\Delta n_1$, $\Delta n_2$
sélectionné préalablement.

Pour choisir des tronçons appropriés de fibres, on étire une fibre de

0069054

façon à faire varier cycliquement le diamètre, par exemple en faisant
varier de façon sinusoïdale la vitesse du tambour d'étirage. La fibre
obtenue, illustrée par la fig. 4, est découpée en tronçons d'une demi-
période, dans lesquels sera choisie la zone de polissage, c'est-à-dire
l'endroit où le rayon a une valeur $r_2$ permettant de réaliser le couplage
à la longueur d'onde voulue.

En pratique, le but du dispositif de couplage consiste à injecter plusieurs ondes lumineuses de fréquences différentes sur une fibre principale, qui constitue par exemple une ligne d'un réseau de télécommunications, dont les caractéristiques sont connues. Il s'agit donc de choisir la fibre de couplage permettant d'obtenir un transfert de puissance
optimal pour les longueurs d'ondes de travail.

En référence à la fig. 2A, la fibre principale 1A comporte un coeur 11A
de rayon $r_1$ entouré d'une gaine 21A. La gaine est réalisée en silice
($SiO_2$) dont l'indice de réfraction a une valeur $n_{s1}$. Le coeur 11A est
·réalisé en silice dopée, dont l'indice de réfraction a une valeur $n_{c1}$.
La fibre de couplage 2A a un coeur 12A de rayon $r_2$ entouré d'une gaine
22A. La gaine est également réalisée en silice ($SiO_2$) et a un indice de
réfraction $n_{s2} = n_{s1}$. Le coeur 12 est réalisé en silice plus fortement
dopée et a un indice de réfraction $n_{c2} > n_{c1}$. Il en résulte que les variations d'indices des fibres 1A et 2A, respectivement égales :

$$\Delta n_1 = n_{c1} - n_{s1}$$
$$\Delta n_2 = n_{c2} - n_{s2}$$

sont liées par la relation

$$\Delta n_1 < \Delta n_2$$

On notera par la suite que cette condition, ajoutée à la condition
$r_1 > r_2$, est suffisante pour permettre le couplage pour une longueur
d'onde donnée, c'est-à-dire pour réaliser un multiplexage.

La fig. 3A représente la variation théorique d'indice entre le coeur
12A et la gaine 22A entourant ce coeur, du second tronçon de fibre 2A,
dans le cas où cette fibre est une fibre à saut d'indice. Toutefois, on
notera que le couplage est également possible avec des fibres optiques
ayant des profils d'indice de réfraction différents.

Dans le cas de la fig. 2B, la fibre de couplage 2B a un coeur 12B fortement dopé et une gaine divisée en deux zones : la zone périphérique 22B et la zone 32B adjacente au coeur. Le profil d'indice du second tronçon de fibre 2B est représenté par la fig. 3B. Une telle fibre s'obtient par des dopages appropriés connus en soi. Le but de cette réalisation consiste à augmenter la valeur de $\Delta n_2$ pour optimaliser le couplage.

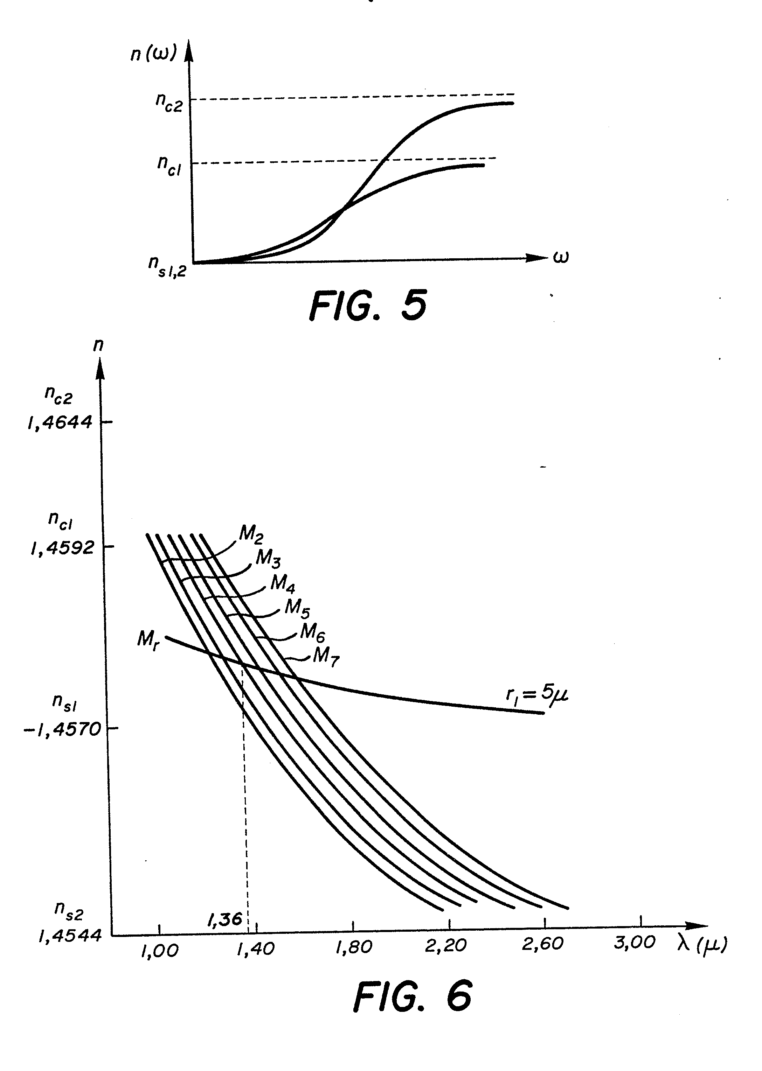

La fig. 5 représente schématiquement les courbes de dispersion des deux modes fondamentaux $HE_{11}$ des fibres 1A et 2A représentées par la fig. 2A, pour lesquelles les conditions : $r_1 > r_2$ et $\Delta n_1 < \Delta n_2$, énoncées précédemment, sont remplies. Les ordonnées représentent l'indice effectif des modes $HE_{11}$ des deux fibres 1A et 1B; coeurs ($n_{c1}$, $n_{c2}$), gaines ($n_{s1}$, $n_{s2}$). Les abscisses sont fonction de la fréquence f ($\omega = 2\pi f$) et liées à la longueur d'onde par la relation :    $= \dfrac{2\pi c}{\omega}$ ou $c$ représente  la célérité de la lumière dans le vide.

Les deux courbes de dispersion ont un point d'intersection qui correspond à une longueur d'onde de couplage $\lambda_c$. En pratique, dans le cas où les caractéristiques de la ligne principale sont imposées, on choisit la longueur d'onde de travail $\lambda_c$, c'est-à-dire la source laser que l'on utilisera, et on détermine la valeur $r_2$ du rayon du coeur du second tronçon de fibre choisi de telle manière que : $\Delta n_2 > \Delta n_1$, pour laquelle on réalisera le couplage pour la longueur d'onde $\lambda_c$.

Dans ce but, on utilise les courbes de dispersion, par exemple un diagramme similaire à celui représenté par la fig. 6. Ce diagramme correspond au cas de la fig. 2B, c'est-à-dire lorsque les indices de réfraction des gaines des deux fibres 1B et 2B sont différents. La courbe $M_1$ représente la courbe de dispersion du premier tronçon de fibre en fonction de la longueur d'onde. La partie de la courbe tracée sur le diagramme correspond à la zone pour laquelle la fibre est monomode.

Les courbes $M_2$, $M_3$, $M_4$, $M_5$, $M_6$ et $M_7$ représentent les courbes de dispersion du second tronçon de fibre en fonction de la longueur d'onde. Chacune de ces courbes correspond à une valeur $r_2$ donnée. C'est ainsi que la courbe $M_2$ est obtenue pour : $r_2 = 2,2\,\mu$ ; $M_3$ pour $r_2 = 2,3\,\mu$ ;

$M_4$ pour $r_2$ = 2,4 $\mu$ ; $M_5$ pour $r_2$ = 2,5 $\mu$ ; $M_6$ pour $r_2$ = 2,6 $\mu$ et
$M_7$ pour $r_2$ = 2,7 $\mu$ .

La source laser utilisée définit la longueur d'onde de travail :
$\Lambda_c$ = 1,36 $\mu$ , on constate que l'intersection définissant le couplage
aura lieu avec la courbe $M_4$, de sorte que le polissage de la fibre de
couplage devra être effectué à l'endroit correspondant à un rayon $r_2$ du
coeur égal à 2,4 $\mu$ .

Dans le cas de la fig. 6, les valeurs des indices des coeurs et des gaines des deux tronçons de fibres sont les suivantes : $n_{c1}$ = 1,4592;
$n_{s1}$ = 1,4570; $n_{c2}$ = 1,4544 et $n_{s2}$ = 1,4644, de sorte que $\Delta n_1$ = 0,0022
et $\Delta n_2$ = 0,0100.

La fig. 5 montre que l'on a avantage à ce que les courbes de dispersion
se coupent sous un angle relativement grand, pour améliorer la sélectivité du couplage. Dans ce cas, cependant, on ne tire pas suffisamment
parti de la différence des pentes des courbes au point d'intersection.
Pour améliorer la sélectivité du couplage, on se placera dans le cas de
la fig. 6 correspondant au dispositif de couplage de la fig. 2B, ou à
un dispositif dans lequel la zone centrale 32B et la zone périphérique
22B ont le même indice de réfraction correspondant à celui de la zone
centrale 32B. Les deux courbes de dispersion se coupent sensiblement à
l'endroit où leur pente est la plus forte.

Une autre condition pour accroître la sélectivité du couplage consiste
à diminuer le coefficient de couplage des deux fibres, notamment en
augmentant la longueur du couplage. En pratique, cette condition peut
être remplie lors du polissage, lorsque les deux fibres sont polies
après avoir été fixées sur une surface convexe, dont le rayon de courbure R est grand. Des expériences ont été réalisées pour des rayons de
courbure : 0,5 m $<$ R $<$ $\infty$ .

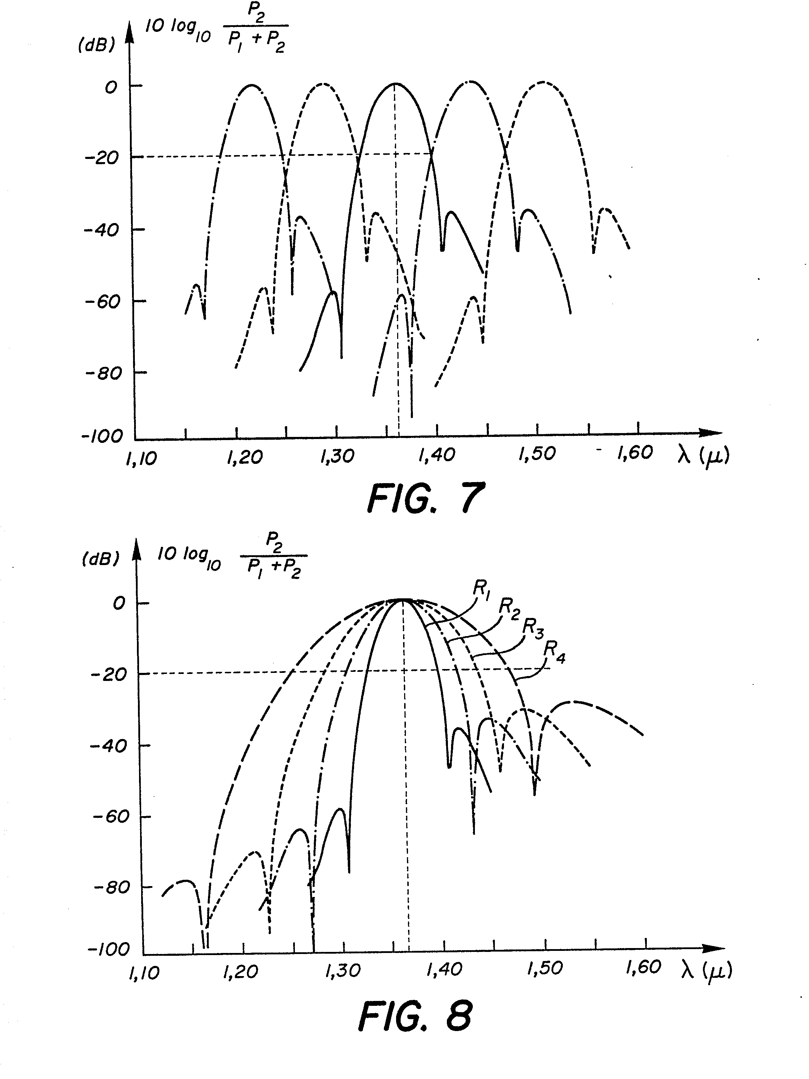

La fig. 7 illustre le transfert de la puissance dans le dispositif de
couplage, en fonction de la longueur d'onde de couplage. Les différentes courbes tracées en traits interrompus correspondent à différentes
longueurs d'ondes de couplage, c'est-à-dire à différentes valeurs du

rayon $r_2$ du coeur du second tronçon de fibre optique. La courbe centrale, tracée en trait plein, correspond au dispositif pour lequel la longueur d'onde de couplage est de : $\lambda_c = 1,36 \mu$ , le rayon du coeur du premier tronçon de fibre optique est : $r_1 = 5 \mu$ , le rayon du coeur du second tronçon de fibre optique est : $r_2 = 2,4 \mu$ et le rayon de courbure des fibres au moment du polissage est égal à 5 m. Les indices des gaines des deux fibres ont les valeurs suivantes : $n_{s1} = 1,4570$ et

$n_{s2} = 1,4544$. Les indices des coeurs ont respectivement les valeurs suivantes :

$$n_{c1} = 1,4570 + 0,0022 = 1,4592$$
$$n_{c2} = 1,4544 = 0,0100 = 1,4644$$

En ordonnées figurent les valeurs en dB prises par la fonction : $10 \log_{10} P2/(P_1 + P_2)$, où $P_1$ et $P_2$ représentent les puissances transférées par les tronçons de fibre optique, le premier étant excité. La bande passante à - 20 dB est approximativement égale à 300 nm, ce qui implique une séparation des canaux de l'ordre de 150 nm.

Les gammes de longueurs d'ondes actuellement utilisées se situent entre 0,8 et 0,9 $\mu$ et 1,3 à 1,55 $\mu$ , et correspondent à des sources laser disponibles. En conséquence, il est possible de prévoir plusieurs canaux pour effectuer du multiplexage et du démultiplexage dans ces zones.

La fig. 8 illustre l'influence du rayon de courbure R des fibres au moment de leur polissage, sur les courbes de transfert de puissance. Pour une même longueur d'onde de couplage : $\lambda_c = 1,36 \mu$ , la bande passante à : - 20 dB augmente très sensiblement lorsque R décroît entre : $R_1 = 5$ m et $R_4 = 0,5$ m. La séparation entre les canaux doit être plus grande pour permettre le multiplexage sans interférence entre les canaux.

Le dispositif de couplage selon l'invention permet d'effectuer plusieurs multiplexages et démultiplexages dans les gammes de longueurs d'ondes que l'on utilise dans le domaine des télécommunications optiques. Même si le dispositif n'est pas très sélectif en $\lambda$ (beaucoup moins qu'un réseau), le domaine des télécommunications optiques, dans lequel les sources ont une importante largeur spectrale, n'exige pas une sélectivité plus grande. La largeur spectrale du multiplexeur peut être variée,

0069054

comme démontré précédemment, en variant le rayon de courbure R et la différence d'indices $\Delta n_2$.

La présente invention a été décrite en référence à des exemples de réalisation donnés à titre d'exemples non limitatifs, qui peuvent subir différentes modifications évidentes pour l'homme de l'art, sans sortir du cadre de cette invention prise dans son sens le plus large.

Revendications

1. Dispositif de couplage d'un premier et d'un second tronçon de fibres optiques monomodes, respectivement préparés de telle manière que la gaine entourant leur coeur soit enlevée jusqu'au voisinage du coeur sur une longueur déterminée, par polissage selon un plan tangentiel à la fibre incurvée, et assemblés par collage de telle manière que les zones polies respectives des deux tronçons soient juxtaposées, dans lequel le premier tronçon de fibre optique a un coeur de rayon $r_1$ et présente une variation d'indice de réfraction $\Delta n_1$ entre le coeur et la gaine entourant ce coeur, et dans lequel le second tronçon de fibre optique a un coeur de rayon $r_2$ et présente une variation d'indice de réfraction $\Delta n_2$ entre le coeur et la gaine entourant ce coeur, caractérisé en ce que les rayons $r_1$ et $r_2$ des coeurs respectifs des deux tronçons de fibres optiques sont liés par la relation suivante :

$$r_1 > r_2$$

et en ce que les variations d'indice $\Delta n_1$ et $\Delta n_2$, respectives des deux tronçons de fibres optiques, sont liées par la relation suivante :

$$\Delta n_1 < \Delta n_2$$

2. Dispositif selon la revendication 1, caractérisé en ce que les gaines entourant respectivement lesdits coeurs ont le même indice de réfraction.

3. Dispositif selon la revendication 1, caractérisé en ce que la gaine entourant le coeur du second tronçon de fibre optique a un indice de réfraction inférieur, au moins au voisinage du coeur, à l'indice de réfraction de la gaine entourant le coeur du premier tronçon de fibre optique.

4. Dispositif selon la revendication 1, caractérisé en ce que lesdits premier et second tronçons de fibres optiques présentent , dans la zone de couplage, un rayon de courbure R tel que :

$$0,5 \, m < R < \infty$$

5. Procédé de fabrication d'un dispositif de couplage d'un premier et d'un second tronçon de fibres optiques monomodes, caractérisé en ce que l'on prépare deux tronçons de fibres optiques ayant respectivement des coeurs de rayons $r_1$ et $r_2$ tels que : $r_1 > r_2$, ces tronçons étant sélectionnés sur des fibres optiques présentant des variations respectives d'indices de réfraction : $\Delta n_1$ et $\Delta n_2$ entre le coeur et la gaine entourant le coeur, telles que : $\Delta n_1 < \Delta n_2$; en ce que l'on polit respectivement chacun de ces tronçons de fibres optiques selon un plan tangentiel à la fibre incurvée selon un rayon de courbure R, de manière à enlever la gaine entourant le coeur jusqu'au voisinage de ce coeur, sur une longueur déterminée; et en ce que l'on assemble ces tronçons de fibres optiques de manière à juxtaposer les zones polies des deux tronçons de fibres optiques.

6. Procédé selon la revendication 5, caractérisé en ce que l'on prépare le premier tronçon de fibre optique en découpant un tronçon d'une première fibre optique, dont le coeur a un rayon $r_1$ donné sur au moins une partie de la longueur de ce tronçon de fibre optique et est réalisé en silice dopée à l'aide d'une substance augmentant son indice de réfraction, et en ce que l'on prépare le second tronçon de fibre optique en découpant un tronçon d'une seconde fibre optique, dont le coeur a un rayon $r_2$ donné, sur au moins une partie de la longueur de ce tronçon de fibre optique et tel que $r_2 < r_1$, le coeur de cette seconde fibre optique étant réalisé en silice plus fortement dopée que celle du coeur de la première fibre, à l'aide d'une substance qui augmente son indice de réfraction, de telle manière que les indices $n_{c1}$ et $n_{c2}$ des coeurs desdites première et seconde fibres optiques sont liés par la relation suivante : $n_{c1} < n_{c2}$.

7. Procédé selon la revendication 6, caractérisé en ce que l'on prépare le second tronçon de fibre optique en découpant un tronçon d'une seconde fibre optique dont la gaine est réalisée en silice dopée, au moins dans sa zone adjacente au coeur, au moyen d'une substance qui abaisse son indice de réfraction, de telle manière que les indices $n_{s1}$ et $n_{s2}$ des gaines entourant les coeurs desdites première et seconde fibres optiques sont liés par la relation suivante : $n_{s1} > n_{s2}$.

8. Procédé selon la revendication 5, caractérisé en ce que les deux tronçons de fibres optiques sont respectivement polis par une surface plane appuyée sensiblement tangentiellement contre leur périphérie, ces fibres étant rendues solidaires d'une surface incurvée, dont le rayon de courbure R, dans la zone de polissage, est tel que : $0,5 \, m < R < \infty$ .

9. Procédé selon la revendication 5, dans lequel la caractéristique $\Delta n_1$ du premier tronçon de fibre optique est fixée, caractérisé en ce que l'on choisit une longueur d'onde : $\lambda_c$ pour laquelle on souhaite obtenir le couplage entre les deux tronçons de fibres optiques, cette longueur d'onde $\lambda_c$ correspondant à la longueur d'onde de la source laser que l'on utilisera comme source de travail, en ce que l'on prépare un second tronçon de fibre optique, dont les écarts d'indices $\Delta n_2$, entre le coeur et la gaine, sont connus et répondent à la relation $\Delta n_2 > \Delta n_1$, ces tronçons de fibre optique étant tels que leur coeur de rayons respectifs $r_1$ et $r_2$ tels que : $r_2 < r_1$ où $r_1$ et $r_2$ sont continûment variables sur au moins une partie de la longueur des tronçons, en ce que l'on trace les courbes de dispersion des deux tronçons de fibres optiques pour différentes valeurs de $r_1$ et de $r_2$, et en ce que l'on détermine le ou les points d'intersection des courbes de dispersion des deux tronçons de fibres optiques pour déterminer les couples $r_1$, $r_2$ pour lesquels on obtient le couplage de ces fibres pour la longueur d'onde $\lambda_c$ choisie.

10. Procédé selon la revendication 9, dans lequel le rayon $r_1$ du premier tronçon de fibre est donné, caractérisé en ce que l'on trace la courbe de dispersion du premier tronçon de fibre optique et en ce que l'on détermine l'intersection de cette courbe avec les courbes de dispersion de la seconde fibre optique, pour déterminer la valeur du rayon $r_2$ du coeur de cette fibre pour laquelle on obtient le couplage pour la longueur d'onde $\lambda_c$ choisie.

**FIG. 1**

**FIG. 2A**

**FIG. 2B**

**FIG. 3A**

**FIG. 3B**

$\sim 1m$

**FIG. 4**

FIG. 5

FIG. 6

2/3

0069054

FIG. 7

FIG. 8